# EUROPÄISCHE PATENTSCHRIFT

(11) **EP 3 452 358 B1**
(45) Veröffentlichungstag und Bekanntmachung des Hinweises auf die Patenterteilung: **12.04.2023**
(21) Anmeldenummer: 17721138.0
(22) Anmeldetag: 03.05.2017
(51) Int. Cl.: B62B 5/00, B62B 5/06, B62B 3/00

(54) **TRANSPORTVORRICHTUNG FÜR MÖBEL**
TRANSPORT DEVICE FOR FURNITURE
DISPOSITIF DE TRANSPORT POUR MEUBLES

(30) Priorität: 06.05.2016 DE 102016108404
(43) Veröffentlichungstag der Anmeldung: 13.03.2019
(73) Patentinhaber: Wolfcraft GmbH, 56746 Kempenich (DE)
(72) Erfinder: WOICK, Lothar, 53406 Hönningen (DE); ZIMMER, Jürgen, 56077 Koblenz (DE); FRONCZAK, Christof, 56754 Dünfus (DE)
(74) Vertreter: Grundmann, Dirk
(86) Internationale Anmeldenummer: PCT/EP2017/060445
(87) Internationale Veröffentlichungsnummer: WO 2017/191148

(56) Entgegenhaltungen:
- EP-A1- 0 487 147
- DE-A1- 3 040 671
- DE-A1- 3 301 360
- DE-U1- 29 816 515
- US-A- 1 549 879
- US-A- 3 137 250
- US-A- 4 165 088
- US-A- 6 102 645
- US-A1- 2004 227 316

## Beschreibung

### Gebiet der Technik

Die Erfindung betrifft eine Transportvorrichtung für Möbel mit zwei Transportelementen, die jeweils eine von zumindest zwei Laufgliedern getragene Tragplatte aufweisen, mit Verbindungsgliedern, mit denen die Tragelemente in unterschiedlichen Anordnungen miteinander verbindbar sind, wobei in einer Parallelanordnung zwei Längsränder der Tragplatten aneinander anliegen.

### Stand der Technik

Transportvorrichtungen der zuvor beschriebenen Art sind als Möbelhunde aus den US 7,275,752 B2, DE 33 01 360 A1, DE 30 40 671 A1, DE 295 15 234 U1 und DE 20 2014 009 821 U1 bekannt. Die DE 30 40 671 A1 und die DE 33 01 360 A1 beschreiben dabei jeweils eine Transportvorrichtung mit zwei von Rädern getragenen Tragplatten, welche durch zwei Verbindungsglieder miteinander verstellbar verbunden sind.

Die DE 298 16 515 U1 beschreibt ein Rollbrett zur Lastenbewegung, welches aus vier 90°-Kreissegmenten zusammengesetzt ist. Die einzelnen Bestandteile des Rollbretts sind mit Kupplungselementen miteinander verbunden.

Aus der US 2004/0227316 A1 ist eine Vorrichtung zum Lastentransport bekannt, bei der zwei Transportelemente mit Bändern miteinander verbunden sind.

Die US 1,549,879 beschreibt eine Transportvorrichtung für Möbel bestehend aus zwei gelenkig miteinander verbundenen Transportelementen, die von einer Stellung, in der zwei Längsseiten parallel aneinander liegen in einer Stellung, in der zwei Schmalseiten aneinander liegen verschwenkt werden können. In einer Zwischenstellung stehen die beiden Tragplatten V-förmig zueinander.

Eine Transportkarre mit Griff ist aus der US 4,165,088 vorbekannt. Ein Transportwagen mit zwei Bügeln ist aus der EP 0 487147 A1 vorbekannt.

### Zusammenfassung der Erfindung

Der Erfindung liegt die Aufgabe zugrunde, eine Transportvorrichtung anzugeben, die ein erhöhtes Verwendungsspektrum besitzt.

Gelöst wird die Aufgabe erfindungsgemäß durch die im Anspruch 1 angegebene Lösung.
Die Unteransprüche stellen vorteilhafte Weiterbildungen dar.

Die erfindungsgemäße Transportvorrichtung besteht aus zwei Transportelementen. Jedes Transportelement besitzt zumindest zwei, bevorzugt aber eine ausreichende Anzahl von Laufgliedern, so dass es eine standstabile Tragplatte aufweist. Drei Laufglieder sind beispielsweise auf der Unterseite der Tragplatte an den Ecken eines Dreiecks befestigt, so dass eine dreieckige Standfläche gebildet ist. Zwei erfindungsgemäße Transportelemente können an voneinander verschiedenen Stellen unter ein Möbelstück gesetzt werden, so dass das Möbelstück mithilfe der Transportelemente auf einem ebenen Untergrund verschoben werden kann. Die Laufglieder sind insbesondere Laufrollen. Die Transportelemente können nicht nur in einem nicht miteinander verbundenen Zustand, sondern auch in einem miteinander verbundenen Zustand als Transportmittel für Möbel oder dergleichen verwendet werden. Eine Transportfläche lässt sich durch die Kombination mehrerer miteinander verbundener Transportelemente vergrößern. Hierzu sind erfindungsgemäß Verbindungsglieder vorgesehen, mit denen die Tragelemente mindestens zweier Transportelemente miteinander verbunden werden können. Zwei Transportelemente können nebeneinander liegend miteinander verbunden werden. Dabei können insbesondere zwei parallel zueinander verlaufende Längsränder nebeneinander liegen. Eine derartige Parallelanordnung kann durch die Verwendung von Verbindungsgliedern erreicht werden. Die Verbindungsglieder können Profilelemente sein. Es ist insbesondere vorgesehen, dass die Verbindungselemente Hakenelemente sind, die miteinander verhaken können, so kann ein Verbindungselement ein Kupplungsvorsprung sein, der in eine Kupplungsausnehmung eines anderen Transportelementes eingreift. Erfindungsgemäß lassen sich zwei Transportplatten derart mit Verbindungsgliedern miteinander verbinden, dass sie in einer stabilen V-Stellung zueinander stehen. Es ist insbesondere vorgesehen, dass die beiden Transportelemente sich nur an einem Punkt berühren und zwischen zwei V-förmig zueinander verlaufenden, aufeinander zuweisenden Längsrändern ein dreieckiger Freiraum verbleibt. Das Verbindungselement kann eine L-Schiene sein. Es kann aber auch ein anders gestalteter Profilkörper sein. Das Verbindungselement besitzt bevorzugt zwei voneinander beabstandete Befestigungspunkte, an denen es an Befestigungsstellen an der Transportplatte befestigt werden kann. Die Transportplatte kann an einer ihrer Schmalränder zwei Befestigungsstellen aufweisen, an denen das Verbindungsglied in einer Verwahrstellung befestigt ist. Das Verbindungsglied hat dann bevorzugt eine Länge, die kürzer ist als die Länge des Schmalrandes der Tragplatte. Mit dem Verbindungsglied können aber auch zwei Tragplatten miteinander verbunden werden. Beispielsweise können zwei Tragplatten in der Parallelanordnung dadurch miteinander verbunden werden, dass die Verbindungsglieder sich an den voneinander wegweisenden Schmalrändern befinden. Die Längsränder der beiden Transportplatten liegen in berührender Anlage. Die Verlängerungen der Längsränder werden von den Verbindungsgliedern gekreuzt, deren Befestigungspunkte an jeweils einer Befestigungsstelle befestigt sind, die zu einer der beiden Tragplatten gehört. In der Parallelanordnung liegen die Verbindungsglieder insbesondere vor Kopf der Tragplatten. Es sind weitere Befestigungsstellen vorgesehen, die sich in der Nähe der Längsränder befinden. In der Parallelanordnung sind diese weiteren Befestigungsstellen kürzer voneinander beabstandet als die Befestigungspunkte an einem Verbindungsglied, so dass diese weiteren Befestigungsstellen verwendet werden können, um die beiden Tragplatten in der V-Anordnung aneinander zu fesseln. Hierzu werden bevorzugt zwei Verbindungsglieder benutzt, wobei ein Verbindungsglied an Befestigungsstellen im Bereich der Schmalränder angeordnet sind und ein Verbindungsglied an Befestigungsstellen befestigt ist, die den Längsrändern benachbart sind, die in der V-Anordnung aufeinander zu weisen. Das sich entlang des Schmalrandes erstreckende Verbindungsglied hat bevorzugt einen L-förmigen Querschnitt, wobei ein L-Schenkel an einer Schmalseite der Tragplatte und der andere L-Schenkel an der Breitseite der Tragplatte anliegt. Die Befestigung des Verbindungsgliedes am Befestigungspunkt mit der Befestigungsstelle der Tragplatte erfolgt bevorzugt über eine Befestigungsschraube, deren Achse senkrecht zur Breitseitenfläche verläuft. Das dem Schmalrand zugeordnete Verbindungsglied verbindet die beiden Tragplatten sowohl in der V-Anordnung als auch in der Parallelanordnung. Das Verbindungsglied bildet demzufolge gewissermaßen einen Verbindungslenker, wobei die Tragplatten um die Verbindungsstellen bzw. Befestigungsschrauben schwenken, wenn sie von der Parallelanordnung in die V-Anordnung gebracht werden. In der V-Anordnung können freie Endabschnitte der Verbindungsglieder in Winkelaussparungen des Schmalrandes eintreten. Es ist bevorzugt ein Griffbügel vorgesehen. Der Griffbügel besitzt zwei Einsteckabschnitte, die parallel zueinander verlaufen und die in Einstecköffnungen der Tragplatte eingesteckt werden können. Der Griffbügel kann mittels Befestigungselementen mit der Tragplatte verbunden sein. Es ist insbesondere vorgesehen, dass durch eine Befestigungsöffnung der Tragplatte zusätzlich zu den Einsteckabschnitten, bspw. parallel zu den Einsteckabschnitten Schraubverbindungselemente hindurchragen, die bspw. von Gewindeschäften ausgebildet sind, auf denen eine Mutter aufgeschraubt werden kann. Es ist aber auch vorgesehen, an den Enden der Endabschnitte der Griffbügel Gewindeabschnitte anzuordnen, auf die Befestigungsmuttern aufgeschraubt werden können. Es ist ferner vorgesehen, dass auf der Unterseite der Tragplatte Befestigungsriegel vorgesehen sind, die die Griffbügel an der Tragplatte fesseln. Die Einsteckabschnitte sind bevorzugt Endabschnitte von zwei parallel zueinander verlaufenden Griffbügeln. Die Griffbügel können mit einem Steg miteinander verbunden sein. Der Steg bildet auch einen Tiefenanschlag zum tiefenbegrenzten Einstecken der Einsteckabschnitte des Griffbügels in die Einstecköffnung der Tragplatte. Es sind Einstecköffnungen vorgesehen, die den Schmalrändern benachbart sind. In der Parallelanordnung oder der V-Anordnung kann in jeweils eine Einstecköffnung einer der Tragplatten ein Endabschnitt des Griffbügels eingesteckt werden, so dass der Griffbügel und insbesondere der Steg des Griffbügels die beiden Tragplatten miteinander verbindet. Die Einstecköffnungen sind derart voneinander beabstandet, dass der Griffbügel sowohl in der V-Anordnung als auch in der Parallelanordnung mit seinen beiden Endabschnitten in dieselben Einstecköffnungen eingesteckt werden kann. Der diesem Schmalrand gegenüberliegende Schmalrand der Tragplatten besitzt ebenfalls Einstecköffnungen zum Einstecken der Einsteckabschnitte eines Griffbügels, so dass auf beiden Schmalseiten zweier mit ihren Längsrändern miteinander verbundenen Tragplatten jeweils ein Griffbügel angeordnet werden kann. Es bildet sich damit ein zwischen zwei Griffbügeln angeordneter Transportraum aus, in dem zu transportierende Gegenstände, beispielsweise Brennholz, gestapelt werden kann, das mittels der Transportvorrichtung transportiert werden kann, wobei die gesamte Transportvorrichtung dann insgesamt sechs Laufgliedern aufweist. Zwei Laufgliedern befinden sich jeweils benachbart zu den voneinander wegweisenden Längsrändern und zwei Laufgliedern befinden sich jeweils im Bereich zweier aneinander grenzender Längsränder. Eine der beiden Tragplatten besitzt zwei Einstecköffnungen, die auf Ihrer Längsmittelebene liegen. In diese Einstecköffnungen können die beiden Endabschnitte des Griffbügels eingesteckt werden. Der Griffbügel erstreckt sich dann parallel zur Längsmittellinie, also parallel zu den beiden Längsrändern. Bei zwei aneinander gekoppelten Transportplatten kann eine derartige Griffanordnung zum Transportieren von Platten verwendet werden. Dies ist insbesondere dann von Vorteil, wenn die beiden Transportelemente in der Parallelanordnung miteinander verbunden sind. Das andere Transportelemente besitzt Einstecköffnungen, die einem Längsrand benachbart sind und in die Anschlagelemente, beispielsweise Anschlagstifte, eingesetzt werden können, an denen sich die in dieser Konfiguration transportierten Platten abstützen können. Die Anschlagelemente und die Enden der Griffbügel besitzen bevorzugt zylindrische Einsteckabschnitte mit identischen Durchmessern, so dass dieselben kreisrunden Einstecköffnungen verwendet werden können.

In einer Weiterbildung der Erfindung ist vorgesehen, dass die Tragplatten an zwei aneinander grenzenden Randkanten Kupplungsvorsprünge aufweisen. Die Kupplungsvorsprünge weisen dabei in Richtung der Flächennormalen der Breitseiten der Tragplatten. Die beiden anderen, aneinander angrenzenden Randkanten der Tragplatte können Kupplungsausnehmungen aufweisen, so dass mehrere Transportelemente mit derartigen Kupplungsgliedern in einer Ebene miteinander verbunden werden können. Dabei treten die Kupplungsvorsprünge einer Tragplatte in die Kupplungsausnehmungen einer anderen Tragplatte ein. Die Tragplatten besitzen darüber hinaus bevorzugt eine Grifföffnung. Es sind somit erste Kupplungselemente vorgesehen, die an ersten Rändern angeordnet sind, wobei zwei erste Ränder senkrecht zueinander stehen. Jeweils einem ersten Rand liegt bevorzugt jeweils ein zweiter Rand gegenüber, der die zweiten Kupplungsglieder aufweist, die mit den ersten Kupplungsgliedern in einen Formschlusseingriff bringbar sind. Die Transportvorrichtung besteht bevorzugt aus zwei miteinander verbundenen Tragplatten, die jeweils standstabil von Laufgliedern getragen werden. Die Längsränder der Tragplatten sind mindestens doppelt so lang wie die Schmalränder. Es ist aber auch vorgesehen, dass eine Transportvorrichtung lediglich aus einer Tragplatte mit vier Laufgliedern besteht. Die Schmalränder dieser Tragplatten sind dann länger ausgebildet, so dass der Quotient zwischen Länge des Längsrandes und Länge des Schmalrandes kleiner als 2 ist. Auf der Breitseite der Tragplatte, die im Gebrauch nach oben weist, können darüber hinaus Rutschsicherungselemente angebracht sein. Es kann sich dabei um reibungserhöht ausgebildete Flächenabschnitte handeln. Die Laufglieder sind auch hier bevorzugt Laufrollen.

### Kurze Beschreibung der Zeichnungen

Im Folgenden wird die Erfindung anhand von Ausführungsbeispielen näher erläutert. Es zeigen:
- Fig. 1: eine erste Perspektive zweier Transportelemente 1, 1', die in einer Parallelanordnung miteinander verbunden sind,
- Fig. 2: eine zweite Perspektive der Transportelementanordnung gemäß Figur 1,
- Fig. 3: eine Draufsicht auf die Transportelementanordnung,
- Fig. 4: eine Rückansicht der Transportelementanordnung,
- Fig. 5: eine perspektivische Darstellung der Transportelementanordnung gemäß der Figuren 1 bis 4 mit einem Griffbügel 10,
- Fig. 6: in einer perspektivischen Darstellung die beiden voneinander getrennten Transportelemente 1, 1',
- Fig. 7: in einer zweiten perspektivischen Darstellung die beiden Transportelemente 1, 1' in einer voneinander getrennten Anordnung,
- Fig. 8: die beiden Transportelemente 1, 1' in einer V-Anordnung ohne Griffbügel 10,
- Fig. 9: eine Darstellung gemäß Figur 8 mit Griffbügel,
- Fig. 10: eine perspektivische Unteransicht der Anordnung gemäß der Figuren 8 und 9,
- Fig. 11: eine weitere Transportelementanordnung, bei der die beiden Transportelemente 1, 1' in einer Parallelanordnung jeweils mit zwei Griffbügeln 10 ausgestattet sind,
- Fig. 12: eine weitere Anordnung, bei der die beiden parallel zueinander angeordneten Transportelemente 1,1' einen Griffbügel 11 tragen, dessen Endabschnitte in Einstecköffnungen 18 eingesteckt sind, die in etwa auf einer Längsmittellinie der Tragplatte angeordnet sind, so dass diese Anordnung zum Transportieren von großen Platten geeignet ist, die sich an Anschlagelementen 20 abstützen können,
- Fig. 13: eine nicht erfindungsgemäße Variante einer Transportvorrichtung, bei der die beiden Transportplatten 3 der Transportelemente 1, 1' mit einem von zwei Lenkern gebildeten Verbindungsglied 22 miteinander verbunden sind,
- Fig. 14: die in der Figur 13 in einer Parallelanordnung dargestellte Transportvorrichtung in einer V-Anordnung,
- Fig. 15: eine weitere nicht erfindungsgemäße Variante in Form eines einzelnen Transportelementes 1, das mit Kupplungsgliedern 24, 25 mit Kupplungsgliedern eines gleich ausgebildeten Transportelementes verbunden werden kann,
- Fig. 16: die in der Figur 15 dargestellte Transportvorrichtung in einer anderen Perspektive,
- Fig. 17: die Transportvorrichtung gemäß der Figuren 15 und 16 mit einem Griffbügel 11 in einer ersten Griffbügelanordnung,
- Fig. 18: die Transportvorrichtung gemäß der Figuren 15 bis 17 in einer zweiten Griffanordnung, bei der sich die Einstecköffnungen 18 für die Endabschnitte des Griffbügels 10 in einem Abstand vom Rand 7 befinden,
- Fig. 19: eine weitere Gebrauchsstellung der Variante gemäß Fig. 15 bis 18,
- Fig. 20: eine weitere Gebrauchsstellung der Variante,
- Fig. 21: eine weitere Gebrauchsstellung der Variante,
- Fig. 22: eine weitere Gebrauchsstellung der Variante, bei der zwei Transportelemente an ihren Längsseiten mittels der Kupplungselemente miteinander verbunden sind. Die beiden Endabschnitte des Griffbügels stecken jeweils in Einstecköffnungen, die voneinander verschiedenen Transportelemente zugeordnet sind,
- Fig. 23: die in der Figur 22 gezeigte Anordnung in einer Unteransicht,
- Fig. 24: die Variante gemäß Fig. 15 bis 18,
- Fig. 25: eine weitere Anordnung der Transportelemente der Variante,
- Fig. 26: vergrößert den Ausschnitt XXVI in Figur 25 und
- Fig. 27: den Schnitt gemäß der Linie 27 in Figur 26.

### Beschreibung der Ausführungsformen

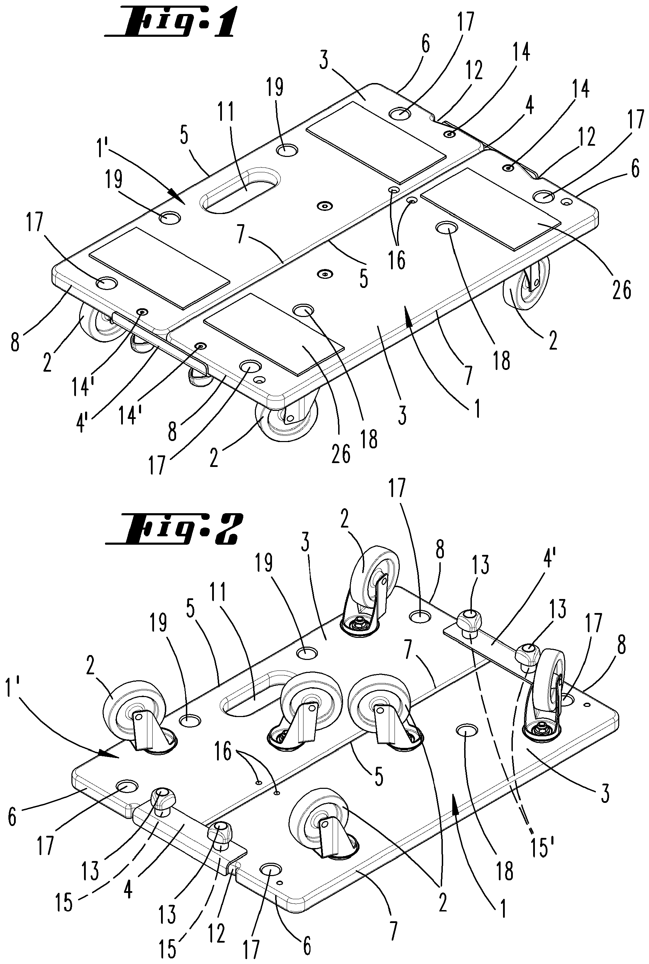

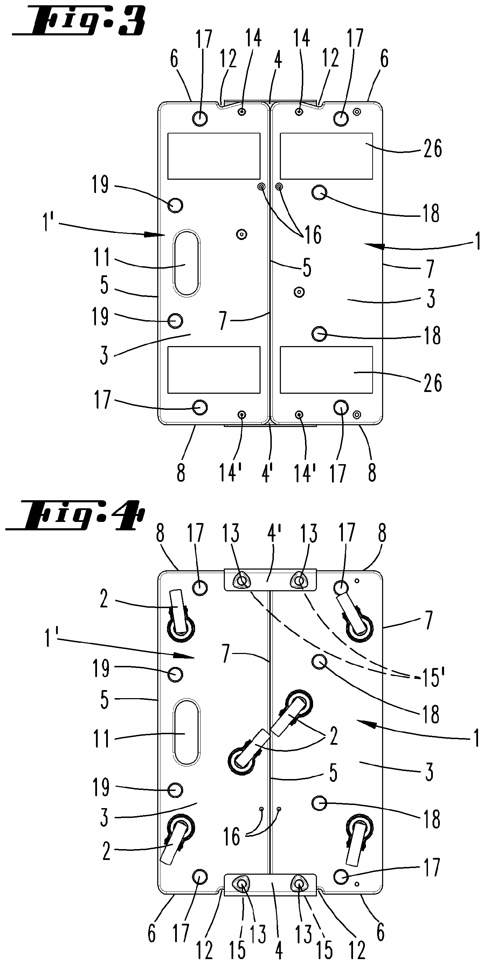

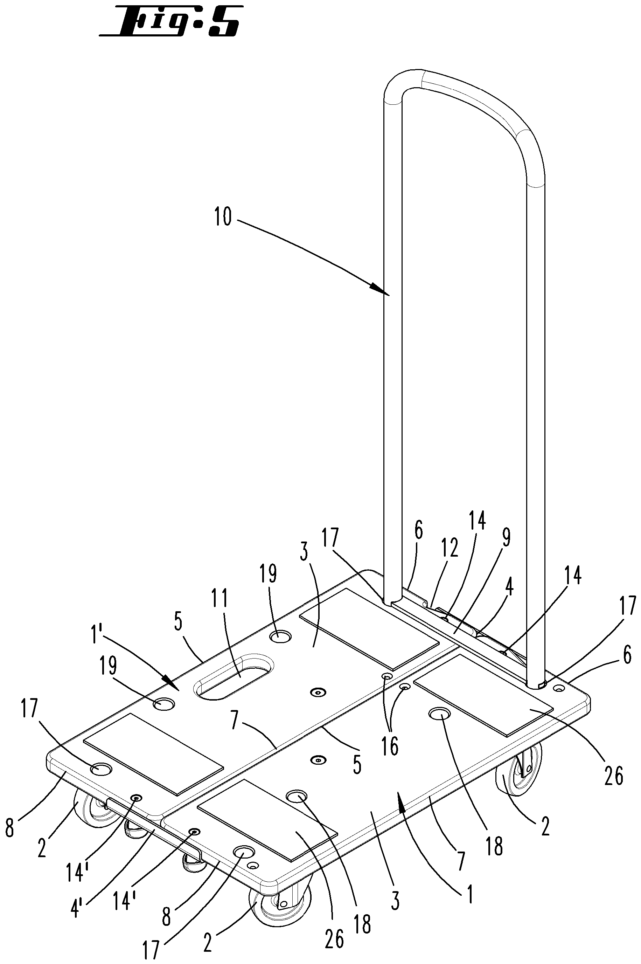

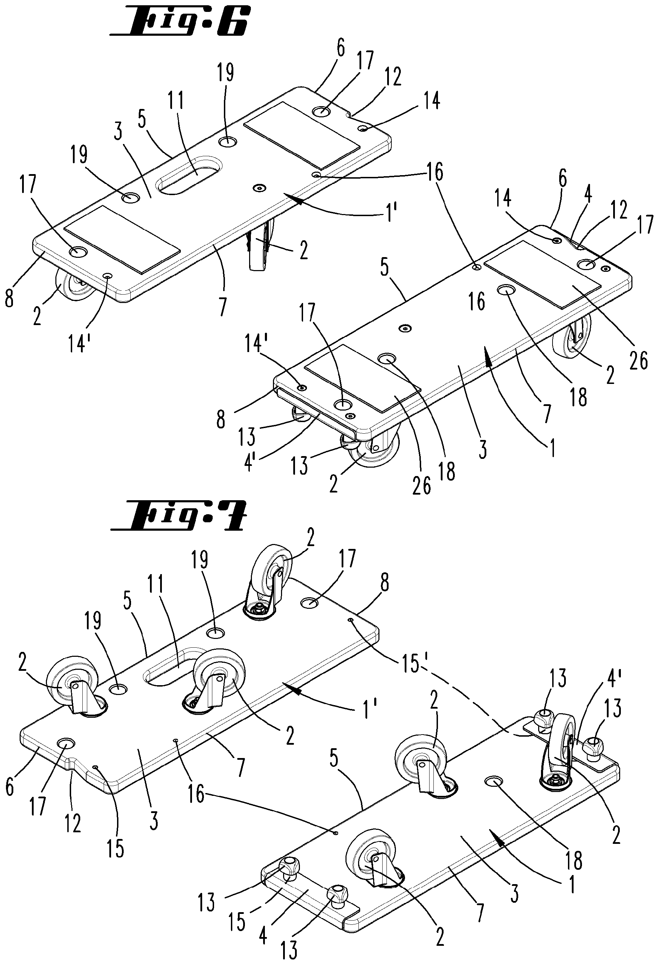

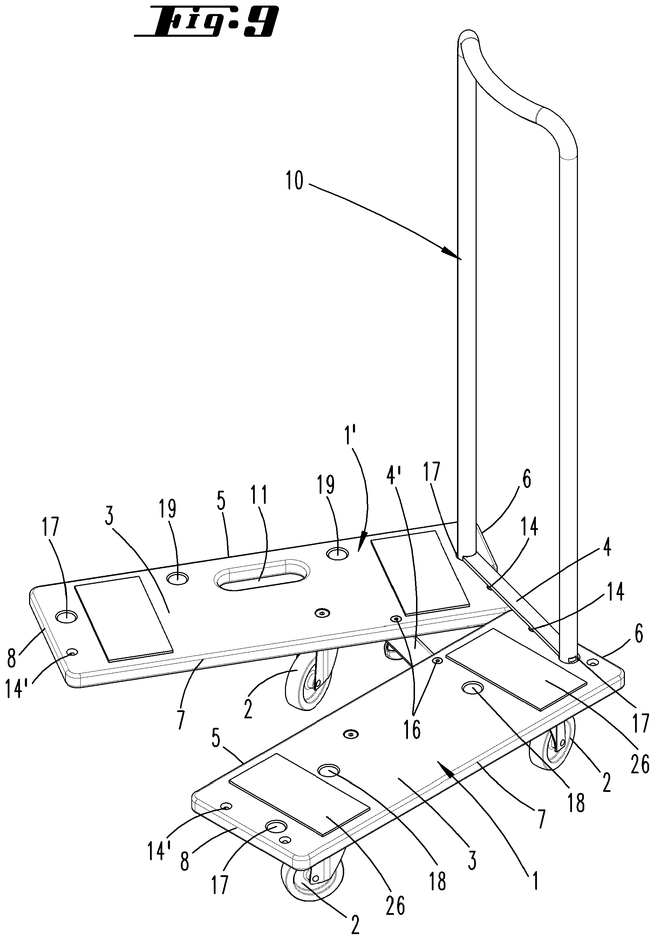

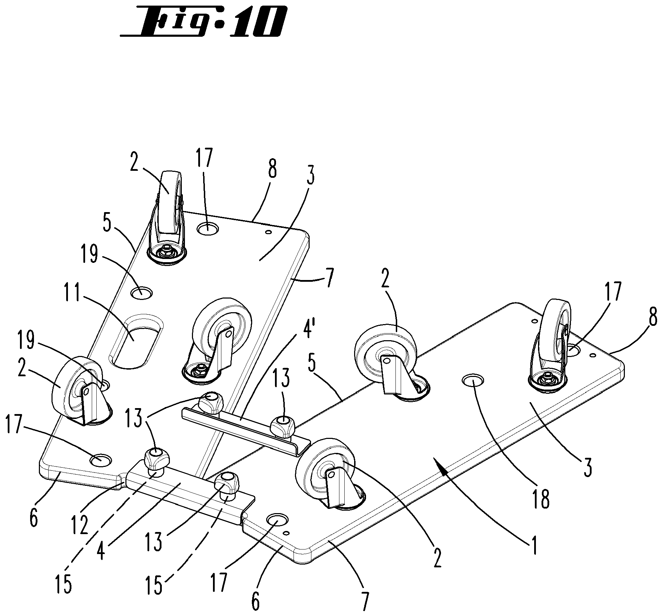

Die Figuren 1 bis 12 zeigen ein erstes Ausführungsbeispiel einer Transportvorrichtung, welches im Wesentlichen aus zwei Transportelementen 1,1' besteht, die sowohl getrennt voneinander als auch in unterschiedlichen Anordnungen relativ zueinander zum Transport von Möbeln oder anderen Gegenständen verwendet werden kann. Die Figuren 6 und 7 zeigen die beiden Transportelemente 1, 1' jeweils in einer Einzeldarstellung, wie sie getrennt voneinander verwendet werden können. Jedes Transportelement 1 besitzt eine Tragplatte 3, die einen im Wesentlichen rechteckigen Grundriss aufweist. Die Tragplatte 3 besitzt zwei sich gegenüberliegende Längsränder 5, 7, die parallel zueinander verlaufen und rechtwinklig dazu verlaufende Schmalränder 6, 8. Die Länge der Längsränder 5, 7 ist mindestens doppelt so groß wie die Länge der Schmalränder 6, 8.

In der im Gebrauch nach oben weisenden Breitseitenfläche der Tragplatte 3 befindet sich eine Vielzahl von Einstecköffnungen 17, 18, 19, in die die Endabschnitte eines Griffbügels 10 in voneinander verschiedenen Anordnungen eingesteckt werden können. Der Griffbügel 10 erstreckt sich dabei quer zur Erstreckungsebene der Breitseitenfläche der Tragplatte 3.

Die Tragplatte 3 besitzt darüber hinaus Befestigungsstellen 14, 14', 16 an denen die Tragplatte 3 mit einem Verbindungsglied 4 befestigt werden kann. An den Befestigungsstellen 14, 14', 16 befinden sich Bohrungen in Richtung der Flächennormalen der Breitseitenfläche der Tragplatte 3, durch die Gewindeschäfte von Befestigungselementen hindurchgesteckt werden können. Auf die Gewindeschäfte können Befestigungsmuttern 13 aufgeschraubt werden. Die Muttern 13 befinden sich auf der nach unten weisenden Rückseite der Tragplatte 3.

Bei dem Verbindungsglied 4 handelt es sich um eine L-förmige Schiene, die aus Stahl, Kunststoff oder einem anderen geeigneten Werkstoff hergestellt sein kann. Die Länge des Verbindungsgliedes 4 ist geringer als die Länge des Schmalrandes 6, 8, so dass das Verbindungsglied 4 an einem Schmalrand 6, 8 nur einer Tragplatte 3 in einer Verwahrstellung befestigt werden kann, wie dies die Figuren 6 oder 7 zeigen.

Mit den Verbindungsgliedern 4 können zwei Tragplatten 3 in verschiedener Anordnung miteinander verbunden werden. Die Figuren 1 bis 4 sowie 11 und 12 zeigen die beiden Tragplatten 3 in einer Parallelanordnung, in denen sich die Längsränder 5, 7 zweier nebeneinander liegender Tragplatten 3 berühren. Die Verbindungsglieder 4 sind an den beiden voneinander wegweisenden Schmalrändern 6, 8 angeordnet. Dabei ist jeweils ein Befestigungspunkt 15, 15' eines Verbindungsgliedes 4, 4' mithilfe eines Fesselungselementes 13 an einer Befestigungsstelle 14, 14' einer Tragplatte 3 befestigt. Ein Schenkel des im Querschnitt L-förmigen Verbindungsgliedes 4 liegt an der Unterseite der Tragplatte 3 an und wird vom Fesselungselement 13 gegen die Unterseite kraftbeaufschlagt. Ein sich in Horizontalrichtung erstreckender L-Schenkel des Verbindungsgliedes 4 liegt an den beiden zueinander fluchtenden Schmalrändern 8 bzw. 6 an.

Die beiden Transportelemente 1, 1' lassen sich von der Parallelanordnung in eine V-Anordnung bringen. Hierzu müssen die das Verbindungsglied 4' fesselnden Fesselungselemente 13 gelöst werden, so dass das Verbindungsglied 4' vollständig von seiner Position am Schmalrand 8 entfernt werden kann. Das gegenüberliegende Verbindungsglied 4 braucht lediglich in eine Lösestellung gebracht werden, so dass sich die beiden Tragplatten 3 gegenüber dem Verbindungsglied 4 geringfügig verschwenken können. Die beiden voneinander wegweisenden Endabschnitte des Verbindungsgliedes 4 können dabei in Winkelaussparungen 12 des Schmalrandes 6 eintreten.

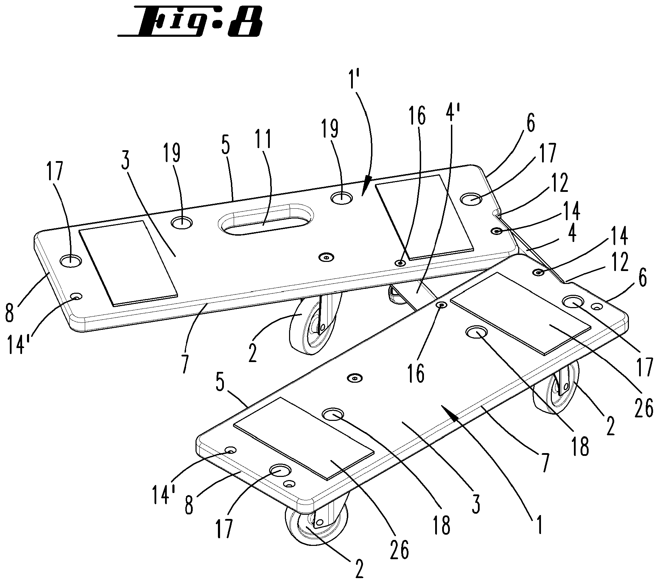

Die Tragplatten 3 werden dann in die in den Figuren 8 bis 10 dargestellte Betriebsstellung gebracht, in der die beiden Längsränder 5, 7 V-förmig zueinander verlaufen und im Bereich ihrer Übergangskante zu dem Schmalrand 6 sich berühren.

Die Fesselungselemente 13 werden jetzt in Befestigungsöffnungen an den Befestigungsstellen 16 gebracht, die den Längsrändern 5, 7 benachbart sind und die in der Parallelanordnung einen Abstand voneinander besitzen, der geringer ist als der Abstand der Befestigungspunkte 15 des Verbindungsgliedes 4. Mit diesem Verbindungsglied 4' werden die Tragplatten 3 in der V-Anordnung stabilisiert.

Auf der Unterseite der Tragplatte 3 befinden sich jeweils drei Laufrollen 2. Es können aber auch anders gestaltete Laufglieder dort angeordnet sein. Anstelle der Laufrollen 2 können dort aber auch Gleiter angeordnet sein. Ferner reicht es grundsätzlich aus, wenn jede Tragplatte 3 lediglich zwei Laufglieder 2 aufweist, die voneinander beabstandet sind, so dass miteinander verbundene oder zusammen verwendete Transportelemente 1, 1' eine Standstabilität besitzen.

Ein Griffbügel 10 besteht aus eine U-förmig gebogenen Rohr, beispielsweise einem Stahlrohr, bei dem die beiden freien Enden mittels eines Steges 9 miteinander verbunden sind. Endabschnitte der parallel zueinander verlaufenden Griffschenkel des Griffbügels 10 sind in Einstecköffnungen 17 einsteckbar, wobei die Einstecköffnungen 17 derart voneinander beabstandet sind, dass der Griffbügel 10 sowohl in der Parallelanordnung als auch in der V-Anordnung in die Einstecköffnungen 17 eingesteckt werden kann. Im zusammengesetzten Zustand stützt sich der Steg 9 auf der Breitseitenfläche der Tragplatte 3 ab.

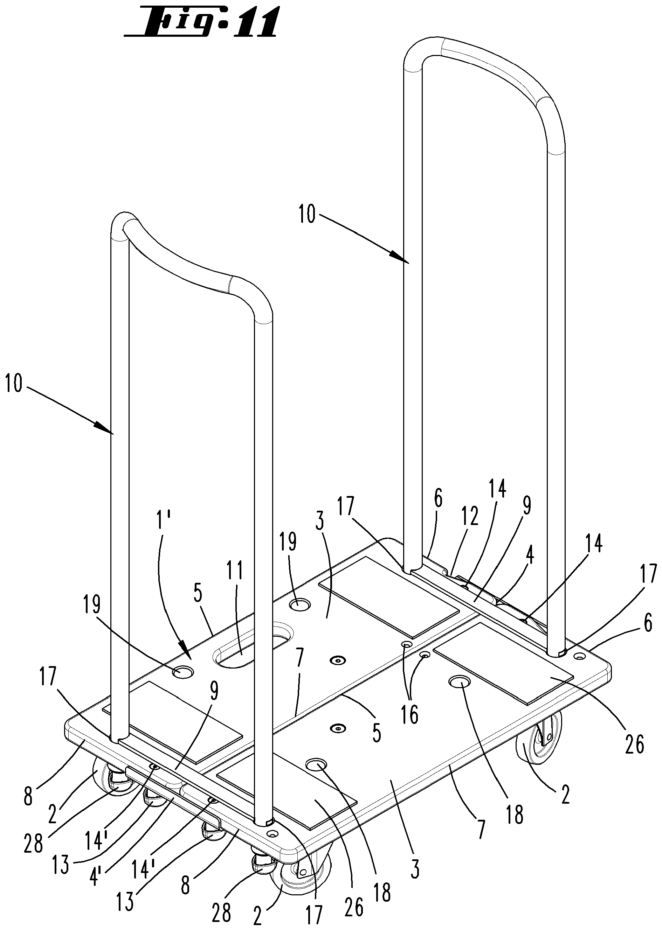

Die Figur 11 zeigt eine weitere Anordnung, bei der ein weiterer Griffbügel 10 in Einstecköffnungen 17 eingesteckt ist, so dass zwei Griffbügel 10 sich jeweils gegenüberliegen und mit ihren Endabschnitten in Einstecköffnungen 17 eingesteckt sind, die an sich gegenüberliegenden Schmalrändern 6, 8 angeordnet sind. eine derartige Anordnung ist insbesondere zum Transport von Brennholz oder dergleichen geeignet, welches zwischen den beiden Griffbügeln 10 gestapelt werden kann.

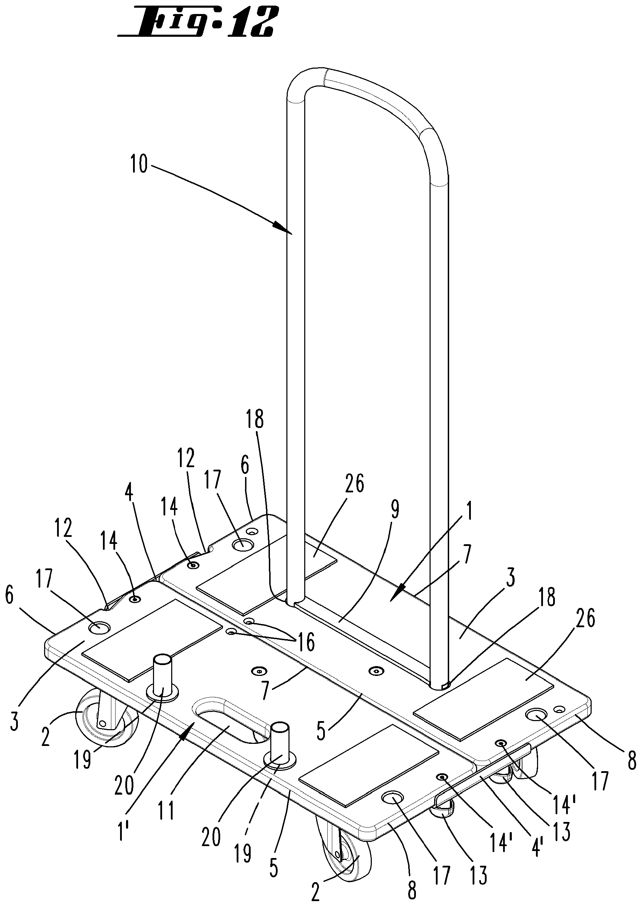

Die Figur 12 zeigt eine Anordnung eines Griffbügels 10 und Anschlagelementen 20, die der Transportvorrichtung die Funktionalität eines Plattenwagens verleiht. Die Endabschnitte des Griffbügels 10 sind jetzt in Einstecköffnungen 18 eingesteckt, die auf einer Längsmittellinie angeordnet sind, die parallel zu den Längsrändern 5, 7 verläuft und annähernd mittig der Schmalränder 6, 8 schneidet. Die Endabschnitte des Griffbügels 10 sind mit der Tragplatte 3 über Befestigungsmittel verschraubt. In Einstecköffnungen 20, die dem Längsrand 5 des Transportelementes 1' benachbart sind, stecken Anschlagstifte 20. Die untere Randkante einer zu transportierenden Patte kann sich an dem Anschlagelement 20 abstützen. Die Fläche der Platte kann sich am oberen Ende des Griffbügels 10 abstützen. Der Schwerpunkt der Platte liegt oberhalb der Breitseitenfläche des aus zwei Transportelementen 1,1' bestehenden Verbundes. Die Durchmesser der Einstecköffnungen 17 bis 19 sind untereinander gleich. Auch die Einsteckenden der Griffbügel 10 und die Einsteckenden der Anschlagstifte haben denselben Durchmesser.

An der Unterseite der Tragplatte 3 befinden sich drei Laufrollen 2, wobei zwei Laufrollen im Eckbereich und eine Laufrolle etwa mittig eines Längsrandes angeordnet ist. Im verbundenen Zustand weisen die Längsränder 5, 7 aufeinander zu, in deren Mitte die einzelne Laufrolle 2 ist, so dass die vier übrigen Laufrollen 2 in den Eckbereichen des Verbundes angeordnet sind.

Auf der im Gebrauch nach oben weisenden Breitseitenfläche der Tragplatten 3 befinden sich reibungsvergrößernde Flächenabschnitte 26. Diese können von auf der Breitseite aufgeklebten Gummimatten ausgebildet sein.

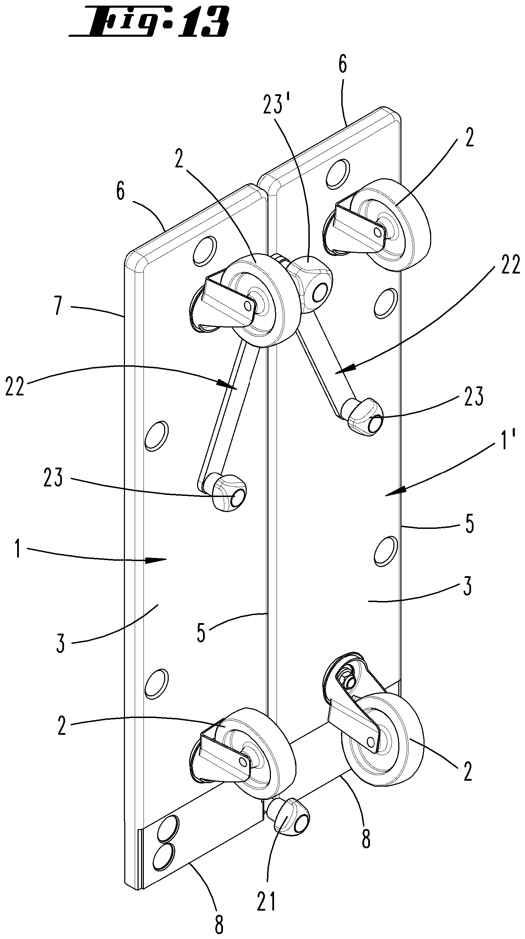

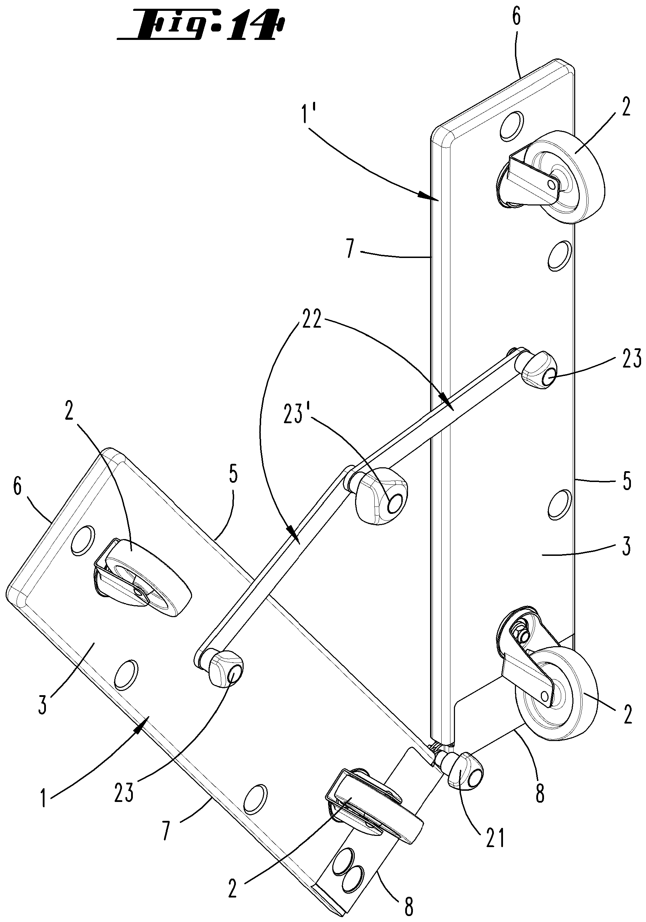

Die Figuren 13 und 14 zeigen eine nicht erfindungsgemäße Variante bei der ebenfalls zwei miteinander verbundene Tragplatten 3 jeweils eines Transportelementes 1, 1' von einer Parallelanordnung in eine V-Anordnung bringbar sind. Hier ist ein Verbindungselement 21 vorgesehen, welches eine Schwenkachse definiert, um die die beiden Transportelemente 1, 1' von der Parallelanordnung in die V-Anordnung schwenkbar sind. Das Verbindungsglied 22 wird hier von zwei Lenkern gebildet, die mit Befestigungselementen 23, beispielsweise einer Befestigungsschraube jeweils an einer Tragplatte 3 befestigt sind. Die beiden anderen Enden der Lenker sind mit einer Befestigungsschraube 23' miteinander verbunden. Durch scherengelenkartiges Verschwenken der beiden Lenker des Verbindungsgliedes 22 können die Enden der Tragplatten 3, die der Verbindungsschraube 21 gegenüberliegen, voneinander beabstandet werden, so dass die in der Figur 14 dargestellte V-Form erreichbar ist.

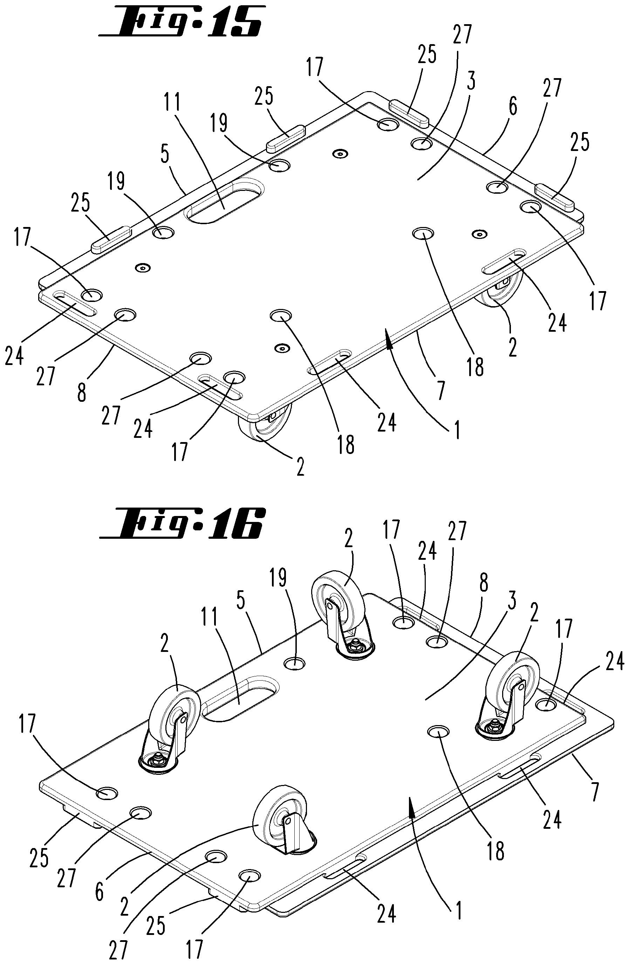

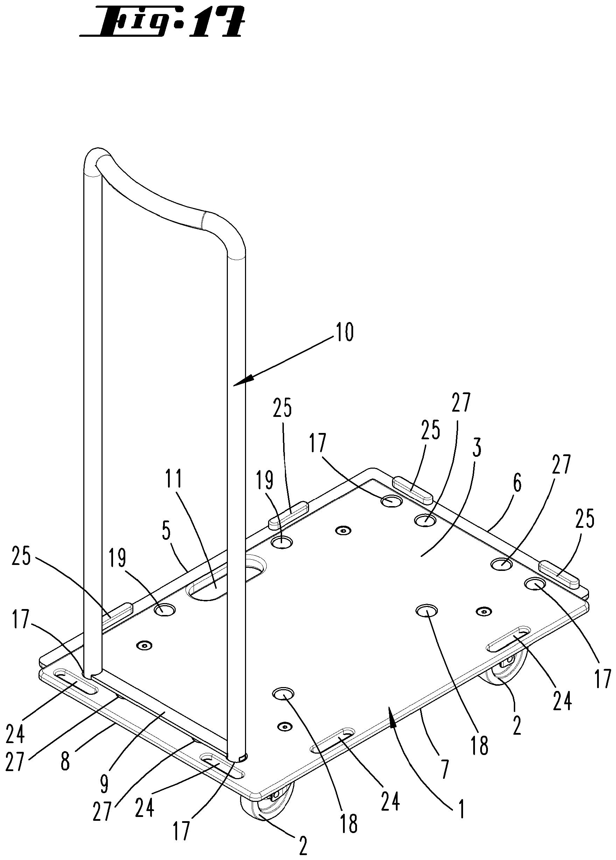

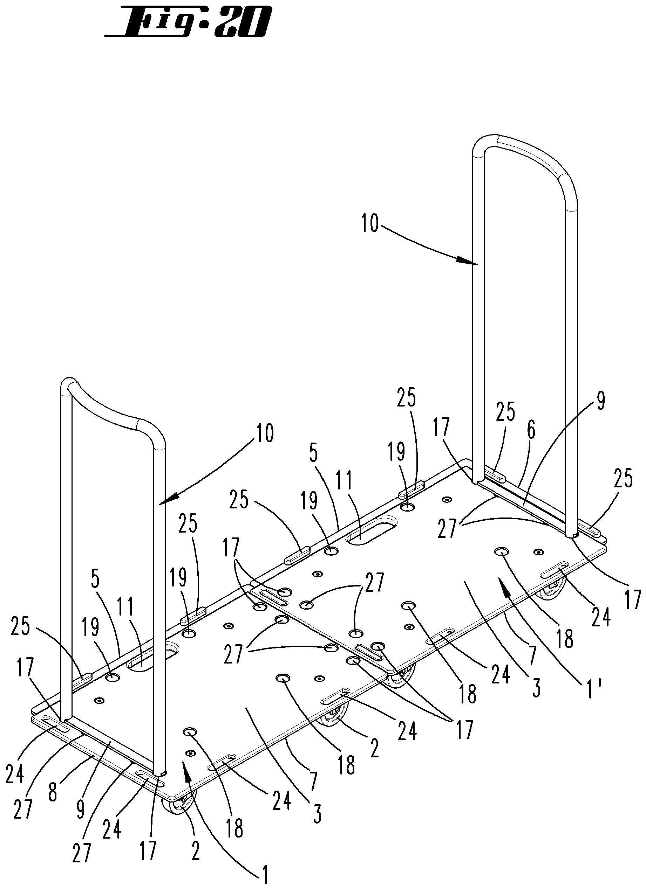

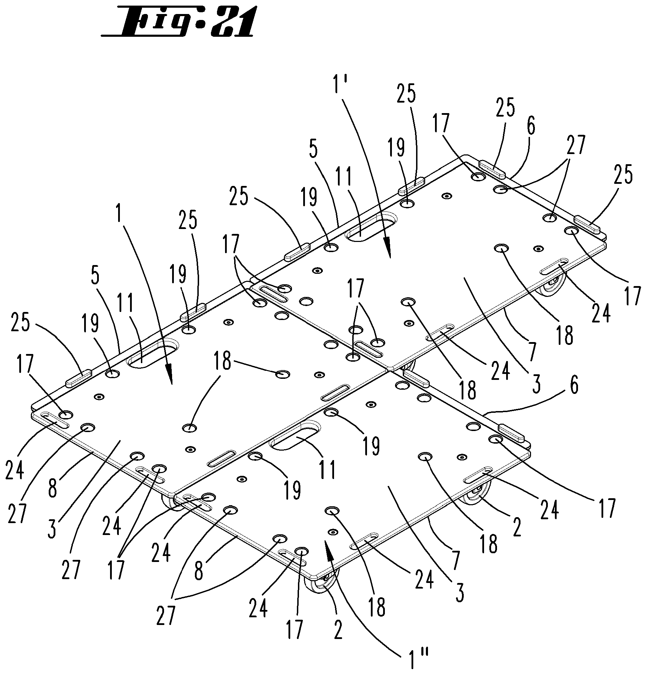

Die Figuren 15 bis 21 zeigen eine weitere nicht erfindungsgemäße Variante, bei der ein oder mehrere Transportelemente 1 über Kupplungsglieder 24, 25 aneinander kuppelbar sind. Jedes Transportelement 1 hat eine rechteckige Tragplatte 3 deren Seitenverhältnis kleiner zwei ist. An zwei winkelförmig zueinander stehenden Längsrändern 5, 6 sind Kupplungsvorsprünge 25 angeordnet. An zwei weiteren aneinander angrenzenden Rändern 7, 8 sind zu den Kupplungsvorsprüngen korrespondierende Kupplungsausnehmungen 24 angeordnet, so dass zwei oder mehrere Transportelemente 1 in der in den Figuren 20 bzw. 21 dargestellten Weise miteinander verbindbar sind, so dass eine große Transportfläche ausgebildet ist, die von mehreren sich in einer Ebene erstreckenden Tragplatten 3 ausgebildet ist.

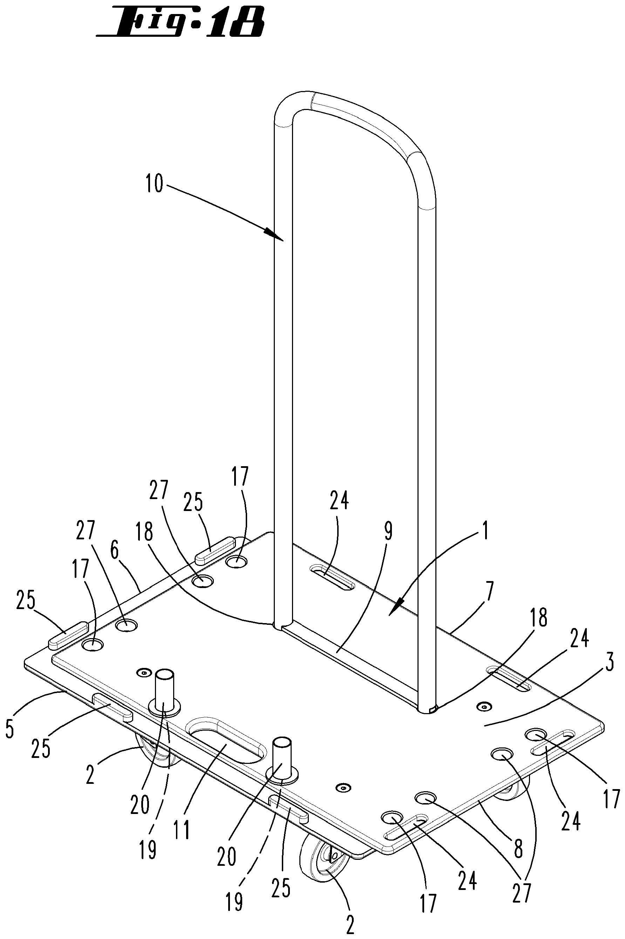

Die Breitseitenfläche der Tragplatte 3 besitzt auch hier eine Vielzahl von gleichgestalteten Einstecköffnungen 17, 18, 19, in die Endabschnitte eines Griffbügels 10 oder Anschlagelemente 20 eingesteckt werden können. Die Einstecköffnungen 18 erstrecken sich hier auf einer Linie, die die Längsränder 6, 8 etwa auf einem Viertel ihrer Länge schneidet, so dass auch dieses Transportelement 1 mit seinen vier an der Unterseite jeweils im Eckbereich angeordneten Laufrollen 2 in der in Figur 18 dargestellten Weise als Plattenwagen verwendbar ist.

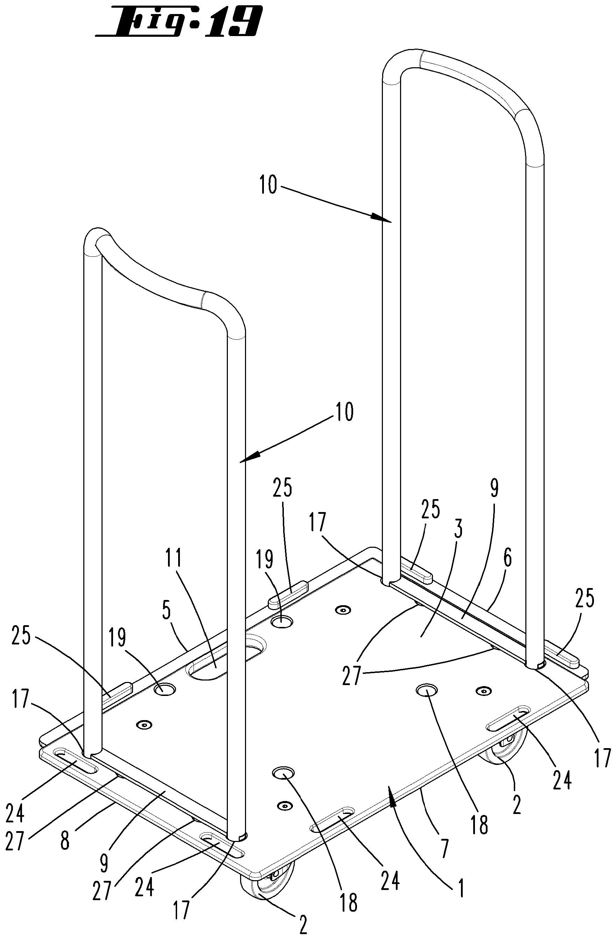

Zwei Griffbügel 10 lassen sich darüber hinaus auch in einer direkten Gegenüberlage anordnen, so dass das Transportelement 1 in der in der Figur 19 beschriebenen Weise zum Transport beispielsweise von Brennholz geeignet ist. Eine ähnliche Anordnung lässt sich auch durch zwei aneinander gekoppelte Transportelemente 1, 1' erreichen, wie es die Figur 20 zeigt.

Die Figur 21 zeigt, dass drei oder mehr Transportelemente 1 auch winkelförmig aneinander gekuppelt werden können.

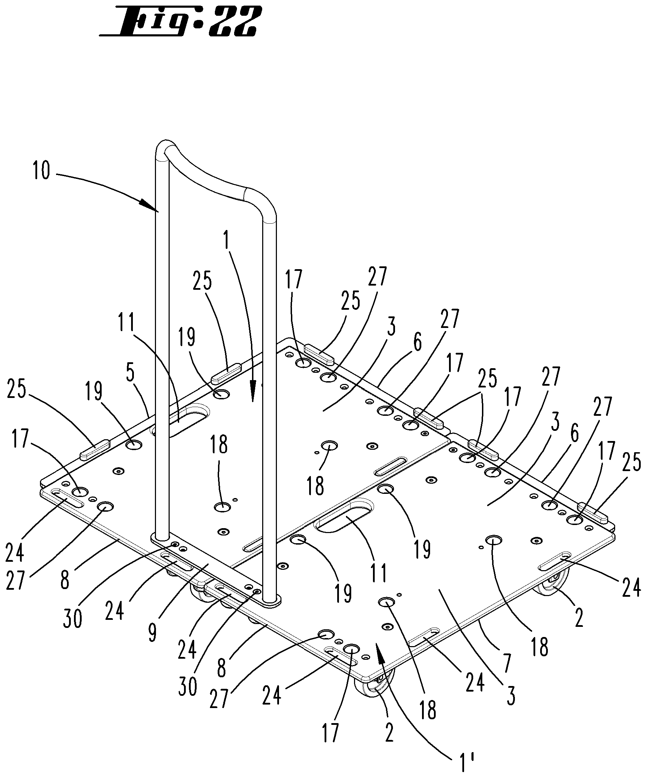

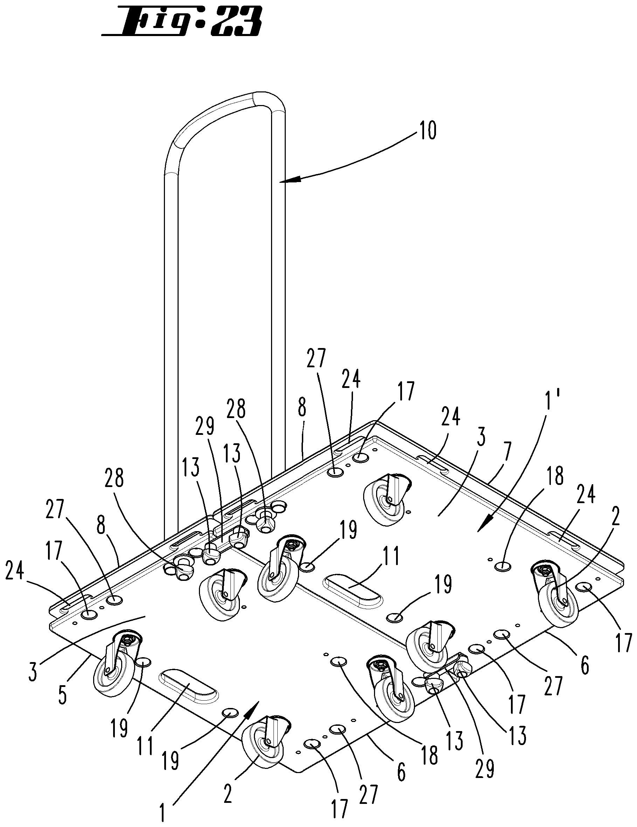

Die Figuren 22 und 23 zeigen eine weitere Anordnung der Transportelemente, wie sie in den Figuren 15 und 16 gezeigt sind. Die beiden Transportelemente 1,1' sind hier an ihren beiden Längsrändern mittels an der Unterseite der Transportplatte angeordneten Verbindungsriegeln 29 miteinander verbunden. Die Verbindungsriegel 29 sind jeweils mittels Fesselungselemente 13 in Form von Gewindeschrauben/-muttern mit der Unterseite der Tragplatte 3 befestigt.

Der Steg 9 des Griffbügels 10 besitzt parallel zu den Endabschnitten des Griffbügels 10 verlaufende Gewindeschäfte, die durch Einstecköffnungen 27 durch die Tragplatte 3 hindurchtreten. Von der Unterseite der Tragplatte 3 her sind auf diese Gewindeschäfte Fesselungselemente 28 in Form einer Fesselungsmutter aufgeschraubt. Es können gegebenenfalls auch zusätzlich Befestigungsschrauben 30 vorgesehen sein, die von oben her durch Befestigungsschrauben-Durchstecköffnungen des Steges 9 hindurchtreten bzw. in die Tragplatte 3 hineingeschraubt werden.

Die Figur 23 zeigt einen Verbindungsriegel 29, der mittels zwei Fesselungselementen 13 jeweils an einer Unterseite einer Tragplatte 3 befestigt ist. Der Verbindungsriegel 29 verbindet zwei an ihren Längsrändern aneinanderstoßende Transportelemente 1, 1'.

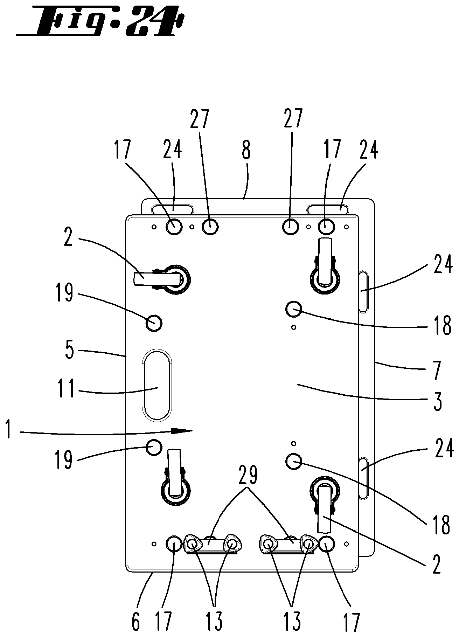

Die Figur 24 zeigt die Verbindungsriegel 29 in einer Verwahrstellung. Mittels zwei Fesselungselementen 13 sind sie an der Unterseite der Tragplatte 3 befestigt.

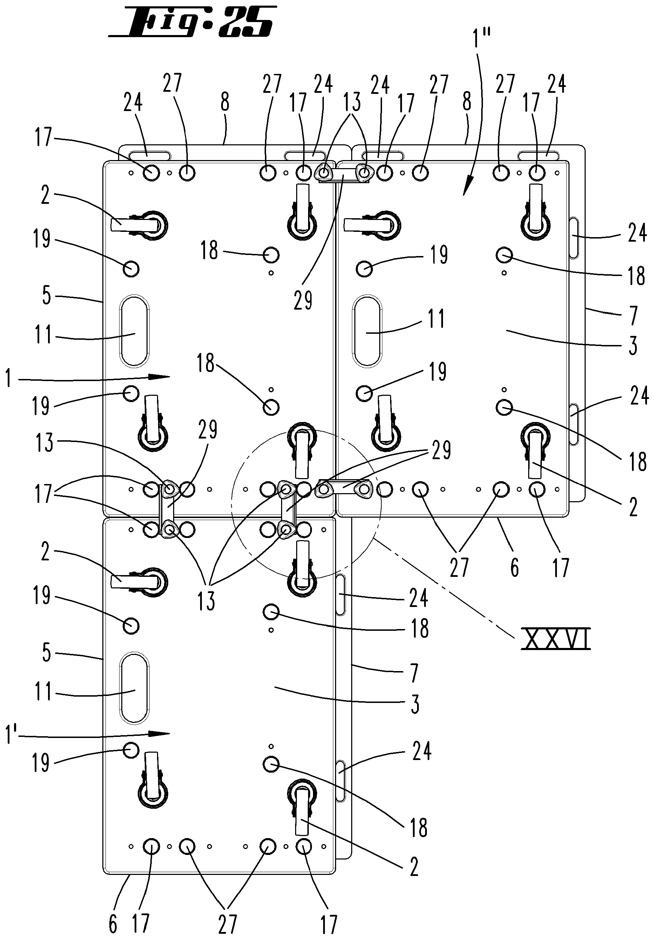

Die Figuren 25 bis 27 zeigen eine Anordnung von drei oder mehr Transportelementen 1, 1', 1", die sowohl an ihren Schmalrändern als auch an ihren Längsrändern mittels Verbindungsriegeln 29 miteinander verbunden sind. Auch hier sind die Verbindungsriegel 29 jeweils mit zwei Fesselungselementen 13 mit den Unterseiten der Tragplatten 3 verbunden.

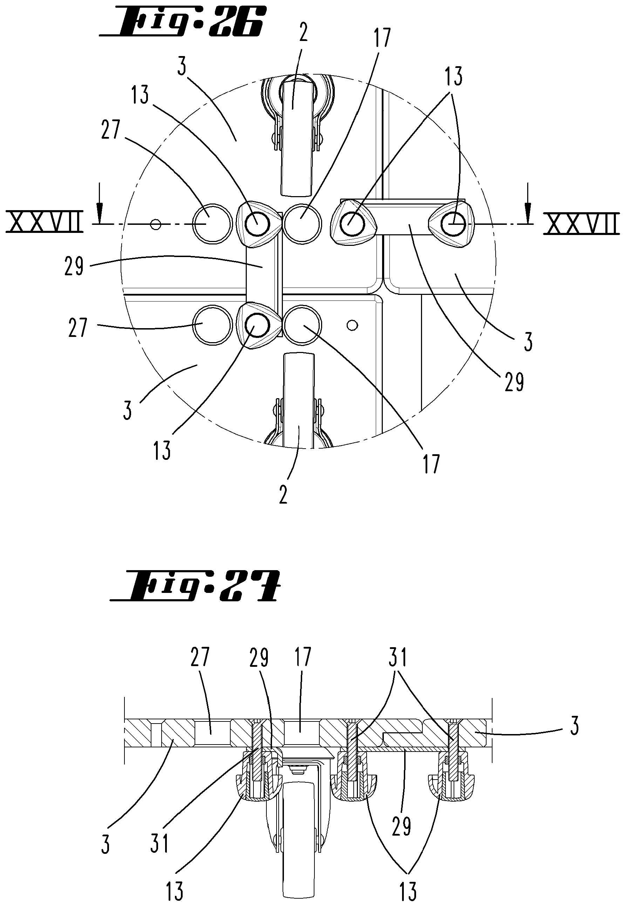

Die Figur 27 zeigt Details dieser Verbindung. Eine Gewindeschraube 31 ist von der Oberseite her durch eine Öffnung der Tragplatte 3 hindurchgesteckt und durchgreift eine Öffnung eines Verbindungsriegels 29. Auf das freie Ende des Gewindeschaftes ist das als Mutter ausgebildete Fesselungselement 13 aufgeschraubt. Die Schraube 31 besitzt einen Senkkopf, der in einer Senkkopföffnung der Oberseite der Tragplatte 3 einliegt.

**Liste der Bezugszeichen**

| | | | |
|---|---|---|---|
| 1 | Transportelement | 21 | Verbindungselement |
| 1' | Transportelement | 22 | Verbindungsglied |
| 1" | Transportelement | 23 | Befestigungselement |
| 2 | Laufglieder | 23' | Befestigungsschraube |
| 3 | Tragplatte | 24 | Kupplungsausnehmung |
| 4 | Verbindungsglied | 25 | Kupplungsvorsprung |
| 4' | Verbindungsglied | 26 | Flächenabschnitt |
| 5 | Längsrand | 27 | Einstecköffnung |
| 6 | Schmalrand | 28 | Fesselungselement |
| 7 | Längsrand | 29 | Verbindungsriegel |
| 8 | Schmalrand | 30 | Schraube |
| 9 | Steg | 31 | Schraube |
| 10 | Griffbügel | | |
| 11 | Grifföffnung | | |
| 12 | Winkelaussparung | | |
| 13 | Fesselungselement | | |
| 14 | Befestigungsstelle | | |
| 14' | Befestigungsstelle | | |
| 15 | Befestigungspunkt | | |
| 15' | Befestigungspunkt | | |
| 16 | Befestigungsstelle | | |
| 17 | Einstecköffnung | | |
| 18 | Einstecköffnung | | |
| 19 | Einstecköffnung | | |
| 20 | Anschlagelement | | |

## Patentansprüche

1. Transportvorrichtung, mit zwei Transportelementen (1, 1'), die jeweils eine von zumindest zwei Laufgliedern (2) getragene Tragplatte (3) aufweisen, die sowohl in einem nicht miteinander verbundenen Zustand als auch in einem miteinander verbundenen Zustand als Transportmittel für Möbel verwendbar sind und mit ersten und zweiten Verbindungsgliedern (4, 4'), mit denen die Transportelemente (1, 1') in einer Parallelanordnung in der zwei Längsränder (5, 7) der Tragplatten (3) aneinander anliegen, oder in einer V-Stellung, in der zwischen zwei V-förmig zueinander verlaufenden, aufeinander zu weisenden Längsrändern (5, 7) ein dreieckiger Freiraum verbleibt, aneinander befestigbar sind, wobei die Verbindungsglieder (4, 4') zwei voneinander beabstandete Befestigungspunkte (15) aufweisen, die an ersten, zweiten und dritten Befestigungsstellen (14, 14', 16) an einer der Tragplatten (3) befestigbar sind, wobei zwei Verbindungsglieder (4, 4') in der Parallelanordnung an den beiden Schmalrändern (6, 8) der im Wesentlichen rechteckigen Tragplatte (3) an den ersten und zweiten Befestigungsstellen (14,14') befestigt sind und wobei in der V-Anordnung das erste Verbindungsglied (4) an die ersten Befestigungsstellen (14) an einem Schmalrand (6) und das zweite Verbindungsglied (4') an den dritten Befestigungsstellen (16) an zwei V-förmig zueinander verlaufenden Längsrändern (5, 7) befestigt sind, wobei die dritten Befestigungsstellen (16) in der Parallelanordnung kürzer voneinander beabstandet sind, als die Befestigungspunkte (15) jedes Verbindungsgliedes (4, 4').

2. Transportvorrichtung nach Anspruch 1, **dadurch gekennzeichnet, dass** die Verbindungsglieder (4, 4') Profilschienen, insbesondere L-Schienen sind.

3. Transportvorrichtung nach einem der vorhergehenden Ansprüche, **dadurch gekennzeichnet, dass** ein Verbindungsglied (22) aus zwei mit einer ersten Befestigungsschraube (23') miteinander verbundenen Lenkern besteht, die mit zweiten Befestigungsschrauben (23) an den Tragplatten (3) befestigt sind.

4. Transportvorrichtung nach einem der vorhergehenden Ansprüche, **gekennzeichnet durch** einen Griffbügel (10) mit im Wesentlichen parallel zueinander verlaufenden Griffschenkeln, deren Enden in Öffnungen (17, (18, 19) der Tragplatte (3) einsteckbar sind.

5. Transportvorrichtung nach Anspruch 4, **dadurch gekennzeichnet, dass** jede Tragplatte (3) im Bereich ihres Schmalrandes (6) jeweils eine Öffnung (17) aufweist, in die das Ende eines Griffschenkels des Griffbügels (10 einsteckbar ist.

6. Transportvorrichtung nach einem der vorhergehenden Ansprüche, **dadurch gekennzeichnet, dass** ein Verbindungsglied (4) in der Parallelanordnung und in der V-Anordnung mit seinen Befestigungspunkten (15) an denselben Befestigungsstellen (14) nahe des Schmalrandes (6) befestigt sind, wobei das Verbindungsglied (4) im Profil L-förmig ist und ein L-Schenkel an einer schmalen Seitenflächen und ein anderer L-Schenkel an einer Breitseitenfläche der Tragplatte (3) anliegt, wobei insbesondere vorgesehen ist, dass der Schmalrand (6) eine Winkelaussparung (12) aufweist, in die in der V-Anordnung ein freies Ende des Verbindungsgliedes (4) eingreift.

7. Transportvorrichtung nach einem der Ansprüche 4 bis 6, **gekennzeichnet durch** ein Paar erste Einstecköffnungen (18) die etwa in der Längsmitte einer der Transportplatten (3) angeordnet sind zum Einstecken des Griffbügels (10) in einer Erstreckungsrichtung parallel zur Längsmittellinie.

8. Transportvorrichtung nach einem der Ansprüche 4 bis 7, **dadurch gekennzeichnet, dass** eine Tragplatte (3) zwei einem Längsrand (5) benachbarte zweite Einstecköffnungen (19) aufweist zum Einstecken der Enden des Griffbügels (10) oder von Anschlagelementen (20).

9. Transportvorrichtung nach einem der Ansprüche 4 bis 8, **dadurch gekennzeichnet, dass** in dritte Einstecköffnungen (17) an sich gegenüberliegenden Randkanten (4, 5) jeweils ein Griffbügel einsteckbar ist.

10. Transportvorrichtung nach einem der vorhergehenden Ansprüche, **dadurch gekennzeichnet, dass** ein oder mehrere erste Ränder (5, 6) Kupplungsvorsprünge (25) aufweisen und ein oder mehrere zweite Ränder (7, 8) Kupplungsausnehmungen (24) aufweisen, in die zum miteinander Verbinden mehrerer Tragplatten Kupplungsvorsprünge (25) eingreifen können, wobei insbesondere vorgesehen ist, dass ein erster Rand (5, 6) einem zweiten Rand (7, 8) gegenüberliegt.

11. Transportvorrichtung nach einem der Ansprüche 4 bis 10, **dadurch gekennzeichnet, dass** zumindest einer von zwei voneinander beabstandeten Endabschnitten des Griffbügels (10) oder ein die beiden Endabschnitte des Griffbügels (10) miteinander verbindender Steg (9) mittels Fesselungselementen (28, 30) an der Tragplatte (3) befestigt ist.

## Claims

1. Transport device, with two transport elements (1, 1'), each having a support plate (3) supported by at least two running members (2), which can be used as transport means for furniture both in an unconnected state and in a connected state, and with first and second connecting members (4, 4') with which the transport elements (1, 1') can be fastened to one another in a parallel arrangement, in which two longitudinal edges (5, 7) of the supporting plates (3) bear against one another, or in a V-position, in which a triangular free space remains between two longitudinal edges (5, 7) which extend in a V-shape relative to one another and point towards one another, the connecting members (4, 4') having two fastening points (15) which are spaced apart from one another, which can be fastened at first, second and third fastening points (14, 14', 16) on one of the supporting plates (3), two connecting members (4, 4') being fastened in the parallel arrangement to the two narrow edges (6, 8) of the essentially rectangular supporting plate (3) at the first and second fastening points (14, 14') and wherein in the V-arrangement the first connecting member (4) is fastened to the first fastening points (14) at a narrow edge (6) and the second connecting member (4') is fastened to the third fastening points (16) at two longitudinal edges (5, 7) extending in a V-shape relative to one another, wherein the third fastening points (16) are spaced apart from one another in the parallel arrangement by a shorter distance than the fastening points (15) of each connecting member (4, 4').

2. Transport device according to claim 1, **characterised in that** the connecting links (4, 4') are profile rails, in particular L-rails.

3. Transport device according to one of the preceding claims, **characterised in that** a connecting link (22) consists of two links connected to each other with a first fastening screw (23'), which are fastened to the support plates (3) with second fastening screws (23).

4. Transport device according to one of the preceding claims, **characterised by** a handle (10) with handle legs extending substantially parallel to one another, the ends of which can be inserted into openings (17, 18, 19) of the support plate (3).

5. Transport device according to claim 4, **characterised in that** each support plate (3) has, in the region of its narrow edge (6), a respective opening (17) into which the end of a handle leg of the handle bracket (10) can be inserted.

6. Transport device according to one of the preceding claims, **characterised in that** a connecting member (4) in the parallel arrangement and in the V-arrangement are fastened with its fastening points (15) at the same fastening points (14) near the narrow edge (6), wherein the connecting member (4) is L-shaped in profile and one L-limb rests against a narrow side surface and another L-limb rests against a broad side surface of the support plate (3), it being provided in particular that the narrow edge (6) has an angular recess (12) into which a free end of the connecting member (4) engages in the V-arrangement.

7. Transport device according to any one of claims 4 to 6, **characterised by** a pair of first insertion openings (18) arranged approximately in the longitudinal centre of one of the transport plates (3) for inserting the handle (10) in a direction of extension parallel to the longitudinal centre line.

8. Transport device according to one of claims 4 to 7, **characterised in that** a support plate (3) has two second insertion openings (19) adjacent to a longitudinal edge (5) for insertion of the ends of the handle (10) or of stop elements (20).

9. Transport device according to one of the claims 4 to 8, **characterised in that** a respective handle can be inserted into third insertion openings (17) at mutually opposite edge edges (4, 5).

10. Transport device according to one of the preceding claims, **characterised in that** one or more first edges (5, 6) have coupling projections (25) and one or more second edges (7, 8) have coupling recesses (24) in which coupling projections (25) can engage in order to connect a plurality of support plates to one another, it being provided in particular that a first edge (5, 6) lies opposite a second edge (7, 8).

11. Transport device according to one of the claims 4 to 10, **characterised in that** at least one of two mutually spaced end sections of the handle bar (10) or a web (9) connecting the two end sections of the handle bar (10) to one another is fastened to the support plate (3) by means of restraining elements (28, 30).

## Revendications

1. Dispositif de transport, pourvu de deux éléments de transport (1, 1'), dont chacun comporte une plaque de support (3) portée par au moins deux corps de roulement (2), qui aussi bien lorsqu'ils ne sont pas assemblés l'un à l'autre que lorsqu'ils sont assemblés l'un à l'autre sont utilisables en tant que moyens de transport pour des meubles, et pourvu de premiers et de deuxièmes corps d'assemblage (4, 4'), à l'aide desquels dans une configuration parallèle dans laquelle deux bords longitudinaux (5, 7) des plaques de support (3) sont adjacents l'un à l'autre, ou dans une position en V, dans laquelle entre deux bords longitudinaux (5, 7) s'écoulant en forme de V l'un par rapport à l'autre, dirigés l'un vers l'autre, il reste un espace libre triangulaire, les éléments de transport (1, 1') peuvent être fixés l'un à l'autre, les corps d'assemblage (4, 4') comportant deux points de fixation (15) écartés l'un de l'autre, qui peuvent se fixer sur l'une des plaques de support (3) sur des premiers, des deuxièmes et troisièmes emplacements de fixation (14, 14', 16), dans la configuration parallèle, deux corps d'assemblage (4, 4') étant fixés sur les deux bords étroits (6, 8) de la plaque de support (3) sensiblement rectangulaire, sur les premiers et deuxièmes emplacements de fixation (14, 14') et dans la configuration en V, le premier corps d'assemblage (4) étant fixé sur les premiers emplacements de fixation (14) sur un bord étroit (6) et le deuxième corps d'assemblage (4') étant fixé sur les troisième emplacements de fixation (16), sur deux bords longitudinaux (5, 7) s'écoulant en forme de V l'un par rapport à l'autre, dans la configuration parallèle, les troisièmes emplacements de fixation (16) étant placés avec un écart plus court les uns par rapport aux autres que les points de fixation (15) de chaque corps d'assemblage (4, 4').

2. Dispositif de transport selon la revendication 1, **caractérisé en ce que** les corps d'assemblage (4, 4') sont des rails profilés, notamment des rails en L.

3. Dispositif de transport selon l'une quelconque des revendications précédentes, **caractérisé en ce qu'**un corps d'assemblage (22) est constitué de deux guidons assemblés l'un à l'autre par une première vis de fixation (23'), qui par des deuxièmes vis de fixation (23), sont fixés sur les plaques de support (3).

4. Dispositif de transport selon l'une quelconque des revendications précédentes, **caractérisé par** un étrier de préhension (10), pourvu de branches de préhension s'écoulant sensiblement à la parallèle l'une de l'autre, dont les extrémités sont insérables dans des orifices (17, 18, 19) de la plaque de support (3).

5. Dispositif de transport selon la revendication 4, **caractérisé en ce que** chaque plaque de support (3) comporte dans la zone de son bord étroit (6) chaque fois un orifice (17) dans lequel l'extrémité d'une branche de préhension de l'étrier de préhension (10) est insérable.

6. Dispositif de transport selon l'une quelconque des revendications précédentes, **caractérisé en ce que** dans la configuration parallèle et dans la configuration en V, un corps d'assemblage (4) est placé par ses points de fixation (15) sur les mêmes emplacements de fixation (14) à proximité du bord étroit (6), le corps d'assemblage (4) étant en forme de L dans le profil et une branche du L étant adjacente à un bord latéral étroit et une autre branche du L étant adjacente à une surface de côté large de la plaque de support (3), étant notamment prévu que le bord étroit (6) comporte une encoche angulaire (12), dans laquelle, dans la configuration en V s'engage une extrémité libre du corps d'assemblage (4).

7. Dispositif de transport selon l'une quelconque des revendications 4 à 6, **caractérisé par** une paire de premiers orifices d'insertion (18) qui sont placés approximativement dans le centre longitudinal de l'une des plaques de transport (3), pour insérer l'étrier de préhension (10) dans une direction d'extension à la parallèle de la ligne centrale longitudinale.

8. Dispositif de transport selon l'une quelconque des revendications 4 à 7, **caractérisé en ce qu'**une plaque de support (3) comporte deux deuxièmes orifices d'insertion (19) voisins d'un bord longitudinal (5), pour l'insertion des extrémités de l'étrier de préhension (10) ou d'éléments de butée (20).

9. Dispositif de transport selon l'une quelconque des revendications 4 à 8, **caractérisé en ce que** dans des troisièmes orifices d'insertion (17), sur des arêtes de bordure (4, 5) mutuellement opposées est insérable chaque fois un étrier de préhension.

10. Dispositif de transport selon l'une quelconque des revendications précédentes, **caractérisé en ce qu'**un ou plusieurs premiers bords (5, 6) comportent des saillies d'accouplement (25) et **en ce qu'**un ou plusieurs deuxièmes bords (7, 8) comportent des évidements d'accouplement (24), dans lesquels pour assembler les unes aux autres plusieurs plaques de support, des saillies d'accouplement (25) peuvent s'engager, étant notamment prévu qu'un premier bord (5, 6) soit opposé à un deuxième bord (7, 8).

11. Dispositif de transport selon l'une quelconque des revendications 4 à 10, **caractérisé en ce qu'**au moins l'un parmi deux segments d'extrémité écartés l'un de l'autre de l'étrier de préhension (10) ou **en ce qu'**une barrette (9) assemblant l'un à l'autre les deux segments d'extrémité de l'étrier de préhension (10) est fixé(e) au moyen d'éléments d'arrimage (28, 30) sur la plaque de support (3).
